Europäisches Patentamt

European Patent Office

Office européen des brevets

(19)

(11) Publication number: **0 016 604**
**B1**

(12) **EUROPEAN PATENT SPECIFICATION**

(45) Date of publication of patent specification: **18.05.83**

(51) Int. Cl.³: **G 05 B 19/407**

(21) Application number: **80300754.1**

(22) Date of filing: **12.03.80**

(54) **Apparatus for converting successive digital values to analog form.**

(30) Priority: **15.03.79 JP 30372/79**

(43) Date of publication of application:
**01.10.80 Bulletin 80/20**

(45) Publication of the grant of the patent:
**18.05.83 Bulletin 83/20**

(84) Designated Contracting States:
**DE FR GB**

(56) References cited:
**DE - A - 2 740 833**
**FR - A - 2 162 529**
**US - A - 3 173 001**
**US - A - 3 886 459**

(73) Proprietor: **Fanuc Ltd**
**5-1, Asahigaoka, 3-chome**
**Hino-shi, Tokyo 191 (JP)**

(72) Inventor: **Imazeki, Ryoji**
**987-44, Naganuma-cho**
**Hachioji-shi Tokyo (JP)**
Inventor: **Yamazaki, Etuo**
**566-93, Shimoongata-cho**
**Hachioji-shi Tokyo (JP)**
Inventor: **Sasaki, Takao**
**469-4, Kobiki-cho Hachioji-shi**
**Tokyo, Esuteito Hachioji 2-502 (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

Apparatus for converting successive digital values to analog form

This invention relates to apparatus for converting successive digital values to analog form.

In equipment which calculates a given digital quantity in accordance with predetermined relationship and converts the calculated digital result into analog form for instance to apply an analog command to a controlled object, such as, for example, numerical control equipment, it may be necessary because of the characteristics of the controlled object to generate such commands in such a way that command values vary smoothly, that is, do not undergo abrupt changes. One example of such a command value is a velocity command value which is applied to servo system of a numerical-controlled machine tool. A rapid change in the velocity command value would result in the machine tool being subjected to a large shock, and hence is not desirable. In general, however, since a certain period of time is required for a digital arithmetic unit to perform a calculation and output a calculated result, if an increase or decrease in value from one calculated result to a next calculated result is abrupt as compared with the time needed for the calculation of that next calculated result, then the difference between the calculated result obtained at a certain point of time and the immediately preceding calculated result is great, and the resulting command value supplied from a D/A converter to the controlled object can undergo a substantial abrupt change. This should be avoided for the reason mentioned above.

French Patent Application No. 72.43532, publication No. 2,162,529, discloses a signal generator in which successive binary words, representing the ordinates of a signal to be synthesised, are read out of a memory. The read out words are passed through two registers. An adder derives differences between consecutive read out words held in the two registers. A saw tooth signal generator supplies saw tooth signals to a digital to analog converter which also receives the differences from the adder through an intermediate unit, so that the digital to analog converter delivers saw tooth signals of peak voltages determined by those differences.

Stepped analog signals, provided by a digital to analog converter arranged to receive the successive read out binary words after passage through the two registers, are combined with the saw tooth signals to provide an analog output signal.

According to the present invention there is provided apparatus for converting successive digital values, supplied with a known time interval between them, into analog form, comprising a digital-to-analog converter and a circuit operable to determine the difference between a current digital value and a last preceding digital value and characterised in that the said circuit is further operable to provide a divided output equal to 1/N of the difference, and in that the apparatus further comprises means operable to effect repeated additions of the divided output to the said last preceding digital value, to provide respective successive cumulative results (N in number), and to deliver the successive cumulative results to the digital-to-analog converter at intervals of 1/N of the said known time interval, for conversion into analog form.

An embodiment of this invention can be used to provide a command generation system in which it can be ensured that smoothly changing command values are provided from equipment of the type which calculates a given digital quantity and then converts the calculated digital result into analog form for application as a command for a controlled object.

For example, a command generation system for a numerical-controlled machine tool or the like can be provided such that even substantial changes in command values can be generated smoothly.

Reference will be made, by way of example, to the accompanying drawings, in which:—

Figure 1 is a schematic block diagram illustrating principal parts of an embodiment of this invention; and

Figure 2 is a waveform diagram showing waveforms for assistance in explanation of the operation of the embodiment of Figure 1.

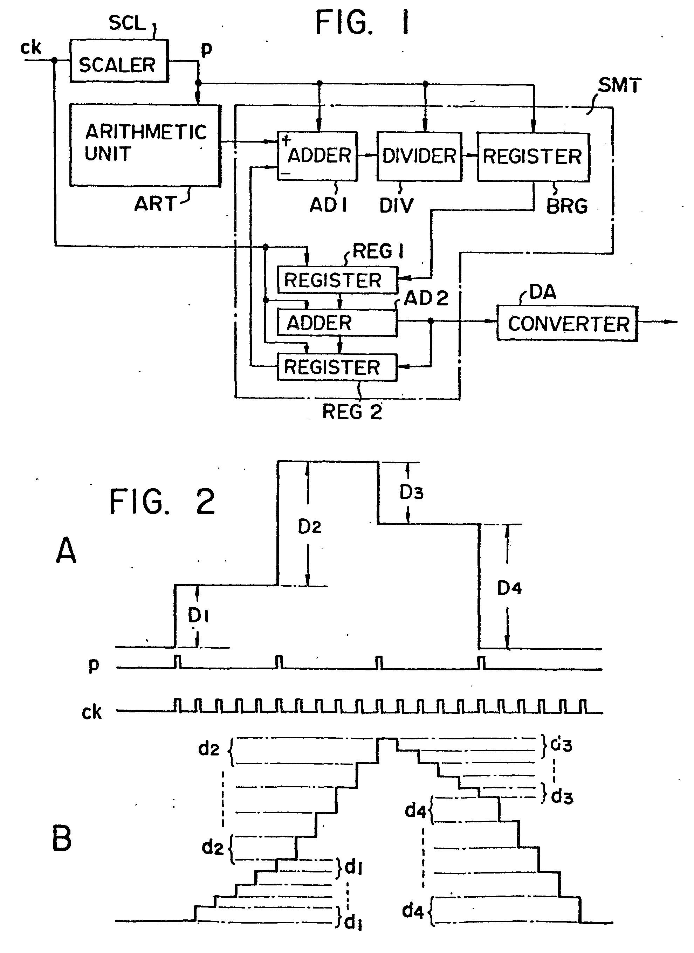

Figure 1 is a block diagram illustrating, by way of example, principal parts of an embodiment of the present invention.

In Figure 1 ART is a digital arithmetic unit; AD1 and AD2 are adders; DIV identifies a divider; BRG denotes a buffer register; REG1 and REG2 are registers; SCL is a scaler; DA is a D/A converter; and ck indicates operation clocking signals.

Previously, the output from a digital arithmetic unit (e.g. ART) has been delivered directly to a D/A converter (e.g. DA), but in the illustrated embodiment of the present invention, there is provided between ART and DA a smoothing circuit, generally indicated by the reference SMT, within the chain line boundary in the Figure. Smoothing circuit SMT is composed of adders AD1 and AD2, divider DIV, buffer register BRG and registers REG1 and REG2, and the calculated output from the digital arithmetic unit ART is applied via the smoothing circuit SMT to the D/A converter DA.

The digital arithmetic unit ART performs operations on predetermined digital quantities by digital means and outputs calculated results in digital form, for example in the same way as an arithmetic unit employed in numerical control equipment. When supplied with a signal $p$ (signals $p$ are obtained by frequency-dividing the operation clocking signals ck, by means of the scaler SCL, down to a frequency 1/N the original clocking frequency), the digital arithmetic unit ART delivers a calculated result to one input terminal of adder AD1 and begins a next computation. To a second input terminal of adder AD1 the content of register REG2 is supplied, and in the adder AD1 a difference value, representing the difference between the calculated result from the digital arithmetic unit ART and the content of the register REG2, is obtained. The difference value thus obtained is applied to the divider DIV, wherein it is divided by N to obtain 1/N the difference value, and the divided output difference value is output from divider DIV and set in buffer register BRG. Such operation is carried out in synchronism with a signal $p$ obtained by frequency-dividing the operation clocking signal ck down to 1/N its original frequency. In a period in which a signal $p$ is not applied, adder AD1 and divider DIV do not operate, and buffer register BRG stores the divided difference value, i.e. 1/N of the difference value from adder AD1.

On the other hand, the content of the buffer register BRG is applied to the register REG1, and upon reception of an operation clock signal ck, adder AD2 adds together the contents of registers REG1 and REG2 and provides the result of addition to D/A converter DA and, at the same time, rewrites the content of the register REG2 with the result of addition. Thereafter, the above operations are repeated upon each application of an operation clock signal ck.

Accordingly, even if a computed result of the digital arithmetic unit ART exhibits a substantial change from the previous computed result, for example, as shown in Figure 2(A) which illustrates successive difference values $D_1$ to $D_4$, values $d_1$ to $d_4$, which are 1/N (n = 5 in the illustrated example) the difference values $D_1$ to $D_4$ between respective successive computed results and the respective immediately preceding computed results, are obtained by means of adder AD1 and divider DIV, and in the adder AD2, the values $d_1$ to $d_4$ are added to the appropriate immediately preceding computed results from ART upon each occurrence of an operation clocking signal ck, and the addition results are delivered to D/A converter DA. As a consequence, the input signal to the D/A converter DA has a form, for example, as shown in Figure 2(B), with the result that the output signal from the D/A converter DA becomes more smoothly varying.

As has been described above, in an embodiment of the present invention, in equipment which calculates successive digital quantities after successive known periods of time and converts calculated results into analog form to issue a command, for example, a value obtained by dividing by N the difference between a current calculated result and a previous calculated result is repeatedly added to the previous calculated result, the additions occurring at time intervals of 1/N of the known period of time, and respective results of the repeated additions are delivered to the D/A converter for conversion into an analog command form. Even if results calculated by the digital arithmetic unit change greatly between calculations, a smooth analog command can be issued at all times. Accordingly, the present invention can be of great utility when employed, for instance, in a numerical control equipment or the like.

Thus, for example, in equipment which calculates digital quantities at known time intervals and converts the calculated results to analog form to apply commands, for example, to a numerical-controlled machine tool, there can be provided a circuit which obtains a difference value between current and previous calculated results and outputs a value obtained by dividing the difference value by N, and an adder which repeatedly adds the output from the abovesaid circuit to the previous calculated result at time intervals of 1/N of the known period of time. The added results from the adder are converted to analog form at time intervals of 1/N of the known period of time to provide commands. As a consequence, command values do not change abruptly but undergo smooth changes, thereby eliminating or reducing the possibility of a great shock being imparted to controlled equipment, for example, a numerical-controlled machine tool.

### Claims

1. Apparatus for converting successive digital values, supplied with a known time interval between them, into analog form, comprising a digital-to-analog converter and a circuit operable to determine the difference between a current digital value and a last preceding digital value, and characterised in that the said circuit is further operable to provide a divided output equal to 1/N of the difference, and in that the apparatus further comprises means operable to effect repeated additions of the divided output to the said last preceding digital value, to provide respective successive cumulative results (N in number), and to deliver the successive cumulative results to the digital-to-analog converter at intervals of 1/N of the said known time interval, for conversion into analog form.

2. A command generation system having equipment for calculating successive digital command values, with a known time interval between them, comprising apparatus according to claim 1, arranged to provide an analog command signal for a controlled entity.

3. A numerical controlled machine tool including a command generation system as claimed in claim 2.

4. A machine tool as claimed in claim 3, wherein the analog command signal provided by the command generation system is employed for velocity control.

## Patentansprüche

1. Vorrichtung zum Umsetzen aufeinanderfolgender Digitalwerte, die mit einem bekannten Zeitabstand voneinander geliefert werden, in Analogform, mit einem Digital-Analog-Wandler und einer Schaltung, die tätig ist, um den Unterschied zwischen einem laufenden Digitalwert und einem letzten vorhergehenden Digitalwert zu bestimmen, dadurch gekennzeichnet, daß die Schaltung ferner tätig ist, um ein geteiltes Ausgangssignal zu liefern, das gleich 1/N des Unterschiedes ist, und daß die Vorrichtung ferner eine Einrichtung umfaßt, die tätig ist, um wiederholte Additionen des geteilten Ausgangssignals zu dem letzten vorhergehenden Digitalwert zu bewirken, um entsprechende aufeinanderfolgende kumulative Ergebnisse (Anzahl N) zu liefern, und um die aufeinanderfolgenden kumulativen Ergebnisse dem Digital-Analog-Wandler in Abständen von 1/N des bekannten Zeitabstandes zum Umsetzen in Analogform zuzführen.

2. Befehlserzeugungssystem mit einer Ausrüstung zur Berechnung aufeinanderfolgender digitaler Befehlswerte mit einem bekannten Zeitabstand voneinander, gekennzeichnet durch eine Vorrichtung nach Anspruch 1, die so angeordnet ist, daß sie ein analoges Befehlssignal für ein gesteuertes Gebilde liefert.

3. Numerisch gesteuerte Werkzeugmaschine, gekennzeichnet durch ein Befehlserzeugungssystem nach Anspruch 2.

4. Werkzeugmaschine nach Anspruch 3, dadurch gekennzeichnet, daß das von dem Befehlserzeugungssystem gelieferte analoge Befehlssignal zur Geschwindigkeitssteuerung verwendet wird.

## Revendications

1. Dispositif pour convertir sous form analogique des valeurs numériques successives fournies avec un intervalle de temps connu entre elles, comprenant un convertisseur numérique-analogique et un circuit capable de déterminer la différence entre une valeur numérique courante et une valeur numérique immédiatement précédente, et caractérisé en ce que ce circuit est en outre capable de produire un signal de sortie divisé égal à la fraction 1/N de la différence, et en ce que le dispositif comprend en outre des moyens capables d'additionner de façon répétée le signal de sortie divisé à la valeur numérique immédiatement précédente, pour produire des résultats cumulés successifs respectifs (au nombre de N), et d'appliquer les résultats cumulés successifs au convertisseur numérique-analogique à des intervalles égaux à la fraction 1/N de l'intervalle de temps connu, pour les convertir sous forme analogique.

2. Un système de génération d'ordres comportant un équipement destiné à calculer des valeurs d'ordre numériques successives, avec un intervalle de temps connu entre elles, comprenant un dispositif conforme à la revendication 1, conçu de façon à produire un signal d'ordre analogique pour un élément commandé.

3. Une machine-outil à commande numérique comprenant un système de génération d'ordres selon la revendication 2.

4. Une machine-outil selon la revendication 3, dans laquelle le signal d'ordre analogique produit par le système de génération d'ordres est employé pour une commande de vitesse.

## FIG. 1

## FIG. 2